# EUROPEAN PATENT APPLICATION

(11) **EP 3 361 775 A1**
(43) Date of publication of application: **15.08.2018**
(21) Application number: 17155239.1
(22) Date of filing: 08.02.2017
(51) Int. Cl.: H04W 28/16, H04W 84/12, H04B 7/155

(54) **CHANNEL SELECTION DEVICE AND METHOD FOR EXTENDED WI-FI NETWORK**

(71) Applicant: Nokia Solutions and Networks Oy, 02610 Espoo (FI)
(72) Inventor: Ligata, Amir, 2018 Antwerpen (BE)
(74) Representative: IP HILLS NV

(57) **Abstract**

According to an embodiment, the disclosure relates to a channel selection device (100) adapted to determine a first channel to be used by a wireless access point (101) for communication with one or more range extenders (130-133) within a first frequency band. The channel selection device (100) comprises a collection module (102) configured to collect throughput demands and channel utilizations within the first frequency band of a front-haul of the access point (101) and of front-hauls of the range extenders (130) and configured to select the front-haul with a highest throughput demand and to select from that front-haul a channel with a least channel utilization as the first channel used by the access point (101) to communicate with one or more range extenders (130-133).

## Description

### Technical Field

The present disclosure generally relates to the selection of a channel that will be used in a wireless network or WLAN, for instance a Wi-Fi network, for communication between an access point, e.g. a Wi-Fi router, and one or more range extenders.

### Background

Wi-Fi networks are becoming increasingly complex in terms of their topology. One reason is that mobile devices are located over large areas, such as multi-story buildings and offices in which a variety of obstacles are present. In addition access points have a limited coverage area which have urged the deployment of range extenders.

Range extenders take an existing wireless signal from the access point and rebroadcast it to create a second network. This way Wi-Fi stations that are out of reach of the access point can still be connected by the range extender that bridges the signal from the station to the access point. The channel used for the communication between the access point and the range extender is typically selected by channel measurements at the access point's location.

### Summary

In this disclosure, the wireless link from a range extender to the access point is further referred to as the back-haul of the range extender and the wireless link from a range extender to connected stations as the front-haul of the range extender. The wireless link from the access point to connected stations and range extenders is referred to as the front-haul of the access point.

It is a problem that the channel used for the back-haul link of the range extenders is the one determined by the access point itself. This existing approach doesn't necessarily imply an optimal channel selection for the range extender.

It is an object of the present disclosure to disclose a channel selection device and method that resolves the above problem and to provide a solution that achieves an optimal channel selection in an extended multiband Wi-Fi network.

This object is achieved, according to a first aspect, by a channel selection device adapted to determine a first channel to be used by a wireless access point, AP, for communication with one or more range extenders, EXTs, within a first frequency band; the channel selection device comprising a collection module configured to collect throughput demands and channel utilizations within the first frequency band of a front-haul of the AP and of front-hauls of the EXTs and to select the front-haul with a highest throughput demand and to select from that front-haul a channel with a least channel utilization as the first channel.

The AP communicates via its front-haul with EXTs and wireless stations, STAs. EXTs communicate via their respective back-hauls with the AP and via their respective front-hauls with other STAs.

The collection module collects the throughput demands and channel utilizations of the front-hauls of the AP and the one or more EXTs within a first frequency band. Of these collected front-hauls, the one having the highest throughput demand is selected and subsequently the channel from that front-haul with the least channel utilization is selected as the first channel. The first channel is then used by the AP for communication with the one or more EXTs.

In other words, the collection module collects throughput demands at the AP's location, but also at the locations of the EXTs within the first frequency band. The channel selection device therefore selects the first channel by taking into account the overall area wherein the wireless network is present. By next selecting the highest throughput demand out of the collected ones, the front-haul having the highest traffic is prioritized. Finally, be selecting the channel having the least channel utilization out of the latter front-haul, a channel is selected wherein the one or more EXTs have the most available time to communicate with the AP. It is therefore an advantage that an optimally channel is selected for the AP than when only the channel characteristics at the AP are taken into account.

According to an embodiment, the channel selection device is further adapted to determine a second channel to be used by the AP for communication with EXTs within a second frequency band; and wherein the collection module is further configured to collect channel utilizations of channels within the second frequency band of a front-haul of the AP and of front-hauls of the EXTs and to select from the channels a channel with a least channel utilization as the second channel.

The AP and one or more EXTs of the one or more EXTs may also be capable to operate in a second frequency band. Within this second frequency band, the collection module collects channel utilizations of the front-hauls of the AP and the one or more EXTs. Next, the channel having the least channel utilization is selected and used by the AP to communicate with EXTs within the second frequency band.

Instead of collecting throughput demands and next selecting the channel with the least channel utilization, the channel selection device may also selected a second channel within a second frequency band based on exclusively the channel utilization. This second channel is then used by the AP to communicate with the EXTs within the second frequency band. This way, a quick channel selection is obtained for a dual-band access point.

If, for example, the channels within the second frequency band interferes less opposite to each other compared to the channels within the first frequency band this way of selecting the channel is preferable.

According to an embodiment, the first frequency band is the 2.4GHz frequency band and the second frequency band is the 5GHz frequency band.

In other words, the first and second frequency bands comply with the IEEE 802.11 standard for wireless networks. This allows that the channel selection device may be implemented in an easy and standardized way.

According to an embodiment, the channel selection device further comprises a trigger module configured to trigger the collection module upon an event.

This way, the processing efficiency and thus the energy efficiency of the channel selection device increases because the determination scheme is only ran upon an occurrence of a certain event and not continuously. Additionally, frequent channels changes may have a negative impact to users' experience due to a possible service disruption. This may be mitigated by the use of the trigger module.

The triggering module may for example comprise a timer for generating a timeout event as the event. This way a trade-off between efficiency and optimal determination of the channel can be offered.

Alternatively or complementary, the event may be an arrival of an alien AP in the wireless network. Since the alien AP may disturb or influence the communication between the AP and one or more EXTs, the collection module immediately anticipates to this new situation.

Alternatively or complementary, the collection module may be triggered when the alien AP interferes with the AP and/or with one or more EXTs. This way the number of times the collection module is triggered is reduced to only this occurrence which increases the efficiency of the channel selection device.

Alternatively or complementary, the event may be a change in a distribution of the throughput demand. This change may, for example, give rise to the prioritisation of another front-haul.

According to a second aspect, the disclosure relates to a method for determining a first channel to be used by a wireless access point, AP, for communication with one or more range extenders, EXTs, within a first frequency band; the method comprising collecting throughput demands and channel utilizations of channels within the first frequency band of a front-haul of the AP and of front-hauls of the EXTs; selecting the front-haul with a highest throughput demand and selecting from that front-haul a channel with a least channel utilization as the first channel; and setting the first channel as the channel used by the AP for communication with EXTs within the first frequency band.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates an extended Wi-Fi network comprising an access point, extenders and a channel selection device according to an embodiment of the invention;
Fig. 2 illustrates steps performed for determining a channel to be used by an access point for communication with one or more range extenders;
Fig. 3 illustrates steps performed for determining a channel to be used by an access point for communication with cross-band range extenders; and
Fig. 4 illustrates a computing system suitable for hosting embodiments of the channel selection device according to the present invention and suitable for implementing the method for channel selection according to the present invention;

### Detailed Description of Embodiment(s)

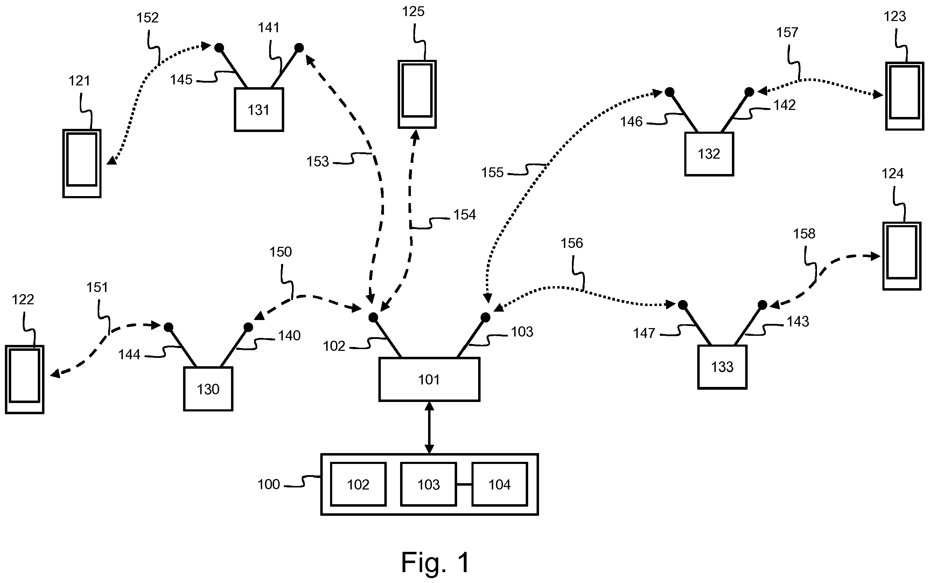

Fig. 1 illustrates an extended Wi-Fi network comprising an access point (AP) 101, range extenders (EXTs) 130- 133 and wireless stations or clients (STAs) 121-125. Fig. 1 further illustrates a channel selection device 100 according to an embodiment of the invention, the channel selection device 100 comprising a collection module 102 and a trigger module 103 wherein the trigger module 103 further comprises a timer 104. The AP comprises two wireless interfaces 102 and 103 each operating at a different frequency band, e.g., the 2.4GHz for the wireless interface 102 and the 5GHz frequency band for the wireless interface 103. Similarly, the EXTs comprise each two wireless interfaces as well, one for their respective back-haul link to one of the two wireless interfaces of the AP 101 and one for their front-haul link to communicate with STAs.

Four different configurations of the EXTs are distinguished. The EXT 130 communicates with the AP 101 within the 2.4GHz frequency band through the wireless link 150 via the wireless interface 140 and communicates with STA 122 via the wireless interface 144 through the wireless link 151 within again the 2.4GHz frequency band. EXT 131 communicates via its wireless interface 141 with AP 102 through the wireless link 153 in the 2.4GHz frequency band and communicates with STA 121 via the wireless interface 145 through the wireless link 152 within the 5GHz frequency band. STA 125 communicates directly with the AP 101 via the wireless interface 102 through the wireless link 154. The AP 101 further communicates via the wireless interface 103 in the 5GHz frequency band with EXTs 132 and 133 through the wireless links 155 and 156 respectively. EXT 132 has a wireless interface 146 to communicate with the AP 101 and a wireless interface 142 to communicate with STA 123 via the wireless link 157. The communication with STA 123 is within the 5GHz frequency band. EXT 133 communicates via the wireless interface 147 with the AP 101 in the 5GHz frequency band and communicates with STA 124 via the wireless interface 143 within the 2.4GHz frequency band through the wireless link 158.

Two settings are thus distinguished regarding the configuration of the EXTs 130-133. EXTs 130 and 132 reuse the same frequency band on their respective wireless back-haul and front-haul link. The EXTs 131 and 133 combine different frequency bands on their respective wireless back-haul and front-haul link. EXTs reusing the same frequency band are defined as standards EXTs, such as EXT 130 and EXT 132, while EXTs which combine different frequency bands for their respective back-haul and front-haul link, such as EXTs 131 and 133, are defined as cross-band EXTs.

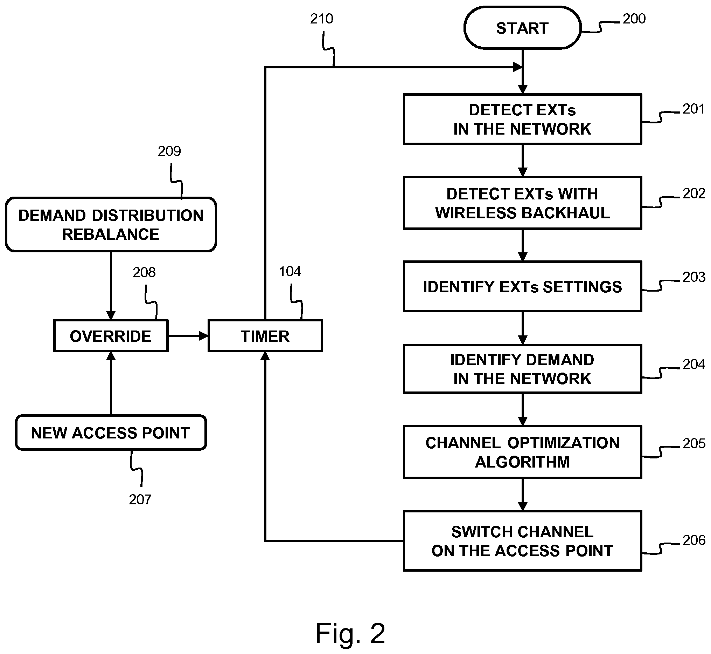

Fig. 2 illustrates steps performed for determining a channel to be used for communication by the AP 101 with the EXTs. At the start 200 in the first step 201 the EXTs 130-133 are detected. Next of these detected EXTs it is detected 202 if these EXTs have a wireless back-haul link with the AP 101, which is the case for all detected EXTs 130-133. Next, of the these EXTs 130-133 the settings are identified in the subsequent step 203, meaning that the EXTs 130-133 are classified into either a standard EXT or a cross-band EXT. From the standard EXTs, thus EXTs 130 and 132, the demand in the network is identified in the next step 204.

The demand in the network is identified through the collection of the throughput demands on the EXTs and the AP. For example in the 2.4GHz frequency band, for EXT 130 and for the AP 101 the front-haul links' throughput demands are collected. In other words, on the wireless link 151 which is the front-haul link of EXT 130 and on the wireless links 150, 153 and 154 which are the front-haul links of the AP 101. These values may be collected by the following attributes as specified in the Broadband Forum TR-181 standard:
- *Device.WiFi.AccessPoint.{i}.AC.{i}.OutQLenHistogramIntervals;*
- *Device.WiFi.AccessPoint.{i}.AC.{i}.Stats.outQLLenHistogram;*
- *Device.WiFi.AccessPoint.{i}.AssociatedDevice.{j}.Stats.BytesSent; and*
- *Device.WiFi.AccessPoint.{i}.AssociatedDevice.{j}.Stats.BytesReceived.*

Next to the throughput demands, the channel utilization on the EXT's 130 front-haul and on the AP's 101 front-hauls are collected as well in step 204.

In step 205 a channel optimization algorithm is executed which identifies of the front-haul links 150, 151, 153 and 154 has the highest throughput demand. Of the front-haul link having the highest throughput demand, a channel is selected which has the least channel utilization corresponding to a first selected channel. In step 206 the channel of the AP 101 to communicate with EXT 130 is switched to this first selected channel. Obviously, the first selected channel is then also used to communicate with EXT 131 and STA 125.

According to an embodiment of the invention, the channel selection device 100 further comprise a trigger module 103 which comprises a timer 104. This timer 104 triggers 210 the channel selection device 100 such that the steps 201-206 are executed again. The timer 104 can triggers the channel selection device periodically, for example every twenty-four hours, but can also be override 208 upon an event. This event may, for example, be the arrival of a new AP 207 in the network or a change in the demand distribution such that this is rebalanced 209 compared to the initial situation.

According to an embodiment, the channel selection device 100 is further configured to determine a second channel to be used for communication by the AP 101 with EXTs within a second frequency band, e.g., the 5GHz frequency band. For a standard EXT operating in the 5GHz frequency band, thus EXT 132, the channel used for the communication in the wireless link 155 is optimized by selected a channel having the least channel utilization as the second channel. The channel optimization algorithm 205 thus comprises for the 5GHz frequency band only the identification of a channel having the least channel utilization.

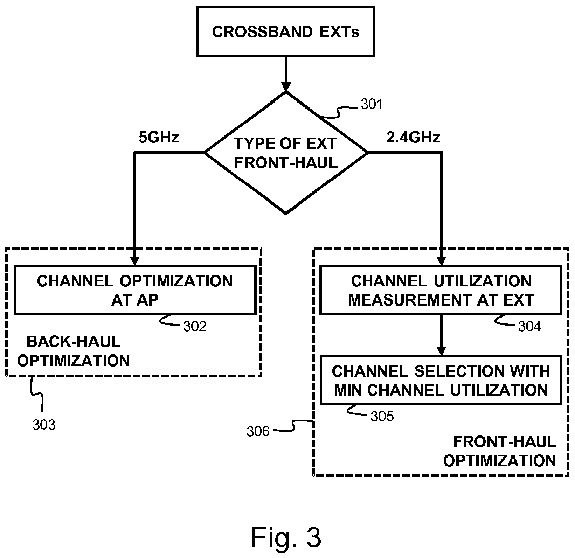

Fig. 3 illustrates steps performed to determine a channel to be used for communication between the access point 101 and cross-band EXTs according to an embodiment of the invention. If an EXT is identified 200 as a cross-band EXT, such as EXT 131 and EXT 133, a further classification is made 301 depending on the type of the EXT's front-haul link. If the front-haul link operates in the 5GHz frequency band, such as cross-band EXT 131, the channel for communication with the AP 101 is optimized 303 by its back-haul. In other words, the channel is optimized 302 at the AP 101, which corresponds to the steps illustrated in Fig. 2.

For a cross-band EXT operating in the 2.4GHz frequency band in its front-haul link, such as EXT 133, a channel optimization for the front-haul link, thus for communication with the EXT's STAs, such as STA 124 through the wireless link 158, is performed independently from the optimization of its back-haul link 158 for communication with the AP 101. In other words, the front-haul is optimized 306 at the EXT 133. This is done first by measuring 304 channel utilizations at the EXT and next by selecting 305 a channel having the least channel utilization. This channel is used by the EXT 133 to communicate with STA 124.

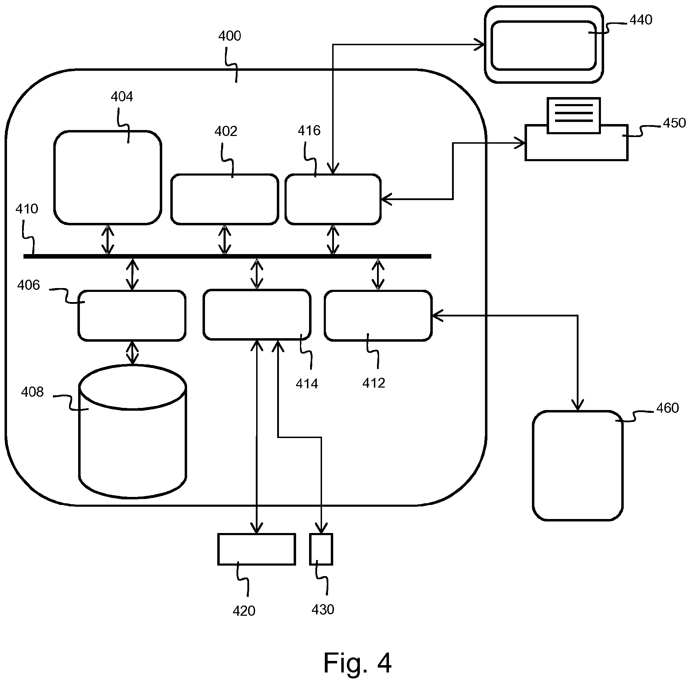

Fig. 4 shows a suitable computing system 400 for hosting the channel selection device 100 according to the present invention and suitable for implementing the channel selection method according to the present invention, embodiments of which are illustrated by Fig. 1 - Fig. 3. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1 Gb Ethernet interfaces that enables computing system 400 to communicate with other devices and/or systems, for example mechanisms for communicating with one or more other computing systems. The communication interface 412 of computing system 400 may be connected to such another computing system 460 by means of a local area network (LAN) or a wide area network (WAN), such as for example the internet, in which case the other computing system may for example comprise a suitable web server. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example 1 TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

The steps executed in the channel selection method according to the present invention, illustrated by the above embodiments, may be implemented as programming instructions stored in local memory 404 of the computing system 400 for execution by its processor 402. Alternatively the instructions may be stored on the storage element 408 or be accessible from another computing system through the communication interface 412.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A channel selection device (100) adapted to determine a first channel to be used by a wireless access point (101), AP, for communication with one or more range extenders (130-131), EXTs, within a first frequency band; the channel selection device (100) comprising a collection module (102) configured to collect throughput demands and channel utilizations within the first frequency band of a front-haul of the AP (101) and of front-hauls of the EXTs (130) and to select the front-haul with a highest throughput demand and to select from that front-haul a channel with a least channel utilization as the first channel.

2. Channel selection device (100) according to claim 1, wherein the channel selection device (100) is further adapted to determine a second channel to be used by the AP (100) for communication with EXTs (132-133) within a second frequency band; and wherein the collection module (102) is further configured to collect channel utilizations of channels within the second frequency band of a front-haul of the AP (101) and of front-hauls of the EXTs (132-133) and to select from the channels a channel with a least channel utilization as the second channel.

3. Channel selection device (100) according to claim 2, wherein the first frequency band is the 2.4GHz frequency band and the second frequency band is the 5GHz frequency band.

4. Channel selection device (100) according to claim 1 further comprising a trigger module (103) configured to trigger the collection module (102) upon an event.

5. Channel selection device (100) according to claim 4 wherein the trigger module (102) further comprises a timer (104) for generating a timeout event as the event.

6. Channel selection device (100) according to claim 4 wherein the event is an arrival of an alien AP in the wireless network.

7. Channel selection device (100) according to claim 6 wherein the alien AP interferes with the AP (101) and/or with the one or more EXTs (130-133).

8. Channel selection device (100) according to claim 4, wherein the event is a change in a distribution of the throughput demand.

9. Method for determining a first channel to be used by a wireless access point (101), AP, for communication with one or more range extenders (130-133), EXTs, within a first frequency band; the method comprising collecting throughput demands and channel utilizations of channels within the first frequency band of a front-haul of the AP (101) and of front-hauls of the EXTs (130); selecting the front-haul with a highest throughput demand and selecting from that front-haul a channel with a least channel utilization as the first channel; and setting the first channel as the channel used by the AP (101) for communication with EXTs (130-131) within the first frequency band.

10. A computer program product comprising a computer-executable instructions for performing the method according to claim 9 when the program is run on a computer.

11. A computer readable storage medium comprising the computer program product according to claim 10.

12. A data processing system programmed for carrying out the method according to claim 9.
